# EUROPEAN PATENT SPECIFICATION

(11) **EP 3 741 624 B1**
(45) Date of publication and mention of the grant of the patent: **02.11.2022**
(21) Application number: 19176098.2
(22) Date of filing: 23.05.2019
(51) Int. Cl.: B60R 11/04, G03B 11/04, H04N 5/225

(54) **A VEHICLE CAMERA DEVICE**
FAHRZEUGKAMERAVORRICHTUNG
DISPOSITIF DE CAMÉRA DE VÉHICULE

(43) Date of publication of application: 25.11.2020
(73) Proprietor: Veoneer Sweden AB, 447 83 Vårgårda (SE)
(72) Inventor: Persson, Madeleine, 583 30 Linköping (SE); Stark, Magnus, 583 30 Linköping (SE); Alm, Gustav, 583 30 Linköping (SE); Gren, Fredrik, 583 30 Linköping (SE)
(74) Representative: Westpatent AB

(56) References cited:
- WO-A1-2013/123161
- WO-A1-2016/145431
- KR-U- 20170 004 422
- US-A1- 2017 274 835
- US-B2- 10 139 707

## Description

### DESCRIPTION OF THE DISCLOSURE

The present disclosure relates to a camera device that comprises a light-trap arrangement and a camera housing with a lens assembly. When mounted to the camera housing, the light-trap arrangement is intended to limit light incoming toward the lens assembly.

Many vehicle environment detection systems comprise one or more sensors such as for example radar sensor, LIDAR sensors, camera devices and ultrasonic sensors. These are used for collecting data used for safety arrangements as well as for driver assistance systems.

Regarding camera devices, these are often fastened to a mounting bracket that is fastened to an interior part of the vehicle, such as the windshield as described in US 10173608 and US 2018154842. In these documents, the mounting bracket is integrated with a light-trap arrangement that is adapted to limit incoming light. US201815260 discloses a separate light-trap arrangement that is fastened to a camera device by means of an adhesive, and after that the resulting camera device is attached to a mounting bracket.

WO 2016/145431 discloses a camera with a low gloss camera shield that in turn comprises two front tabs and two rear apertures for attachment to a main body portion.

US 2017/274835 discloses a camera unit with a bracket having a light-trap portion, two front hole portions and two rear lock portions that are adapted to engage protruding pins of a camera, enabling the bracket to be mounted to the camera. Flat spring members are comprised in the bracket and are adapted to confer a biasing force for locking the pins to the rear lock portions such that the camera is fixed to the bracket.

WO 2013/123161 discloses a vehicular camera system with a frame or bracket with a stray light shield that is attached to a housing by separate fixing elements and a front mechanical clip-and-notch structure.

KR 2017 0004422 discloses camera device with a bracket having a light-trap portion and rear hooks for coupling the bracket to a camera receiving part.

It is an object of the present disclosure to provide a camera device that is more versatile and effective during assembly as well as a corresponding assembly method.

Said object is achieved by means of a camera device that intended to be mounted to a mounting bracket positioned inside a vehicle and comprises a light-trap arrangement and a camera housing with a lens assembly. The invention is defined in the independent claims, whereas advantageous embodiments are defined in the dependent claims. When mounted to the camera housing, the light-trap arrangement is intended to limit light incoming toward the lens assembly. The camera housing comprises at least one housing holding part and the light-trap arrangement comprises at least one corresponding light-trap holding part. Corresponding holding parts are adapted to be brought into an engaging holding position when the light-trap arrangement is attached to the camera housing.

In this way, a versatile and effective assembly is enabled.

According to to the invention, corresponding holding parts are adapted for releasable engagement.

This means that the parts can be easily separated, for example for service or parts change.

According to the invention, for at least one pair of corresponding holding parts, a first holding part is resilient and a second holding part is fixed. The first holding part is adapted to snap into a locking position in engagement with the second holding part.

According to the invention, the light-trap arrangement comprises two light-trap front holding parts, each comprising a resilient hook with a protruding part. The camera housing comprises two housing front holding parts, each comprising a fixed indent part. Each hook is adapted to embrace a corresponding indent part such that each protruding part locks against a corresponding indent part.

In this manner, a secure front locking is enabled.

According to the invention, the light-trap arrangement comprises two light-trap rear holding parts, each comprising a resilient angled tongue part. Furthermore, the camera housing comprises two housing rear holding parts, each comprising a fixed indent part. Each tongue part is adapted to engage a corresponding indent part such that the corresponding tongue part locks against the corresponding indent part.

In this manner, a secure rear locking is enabled.

This object is also achieved by means of a method that is associated with the above advantages.

In particular, this object is also achieved by means of a method for mounting a light-trap arrangement to a camera housing with a lens assembly. When mounted to the housing, the light-trap arrangement is used for limiting light incoming toward the lens assembly. The housing is intended to be mounted to a mounting bracket positioned inside a vehicle. The method comprises bringing at least one rear holding part included in the light trap arrangement in engagement with at least one corresponding receiving rear holding part included in the housing. The method further comprises bringing at least one front holding part included in the light trap arrangement in engagement with at least one corresponding receiving front holding part included in the housing.

### BRIEF DESCRIPTION OF THE DRAWINGS

The present disclosure will now be described more in detail with reference to the appended drawings, where:
- Figure 1: shows a schematic cut-open part of a vehicle with a camera device;
- Figure 2: shows a schematic top perspective view of a light trap arrangement;
- Figure 3: shows a schematic bottom perspective view of the light trap arrangement;
- Figure 4: shows a schematic perspective view of a light trap arrangement, a camera housing and a mounting bracket;
- Figure 5: shows a schematic perspective view of a light trap arrangement mounted to a camera housing;
- Figure 6: shows a schematic top view of a light trap arrangement mounted to a camera housing;
- Figure 7: shows a schematic first section side view of a light trap arrangement mounted to a camera housing;
- Figure 8: shows a schematic second section side view of a light trap arrangement mounted to a camera housing; and
- Figure 9: shows a flowchart for a method according to the present disclosure.

### DETAILED DESCRIPTION

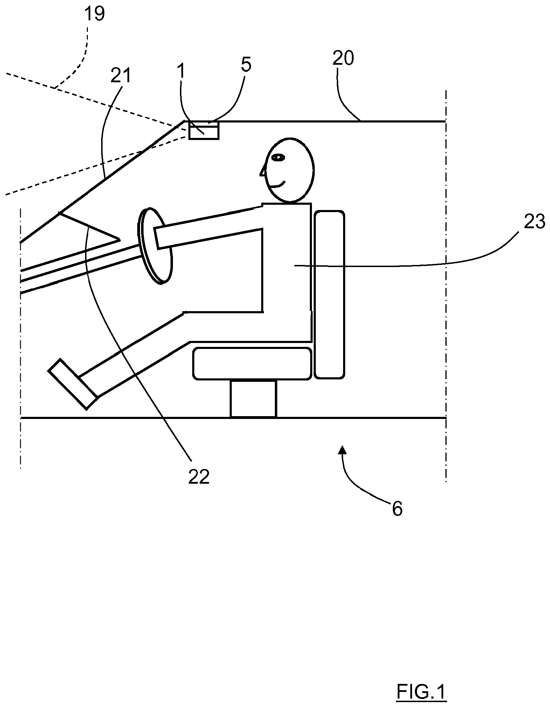

Figure 1 schematically shows a cut-open part of a vehicle 6, where the vehicle 6 comprises a digital camera device 1. The digital camera device 1 is arranged for capturing images of the surroundings outside the vehicle 6 by means of a certain field of view 19. A digital camera device 1 can also, or alternatively, be arranged for capturing images of a driver 23, where these images, which may include eye movements, for example can be used for detecting a degree of driver drowsiness.

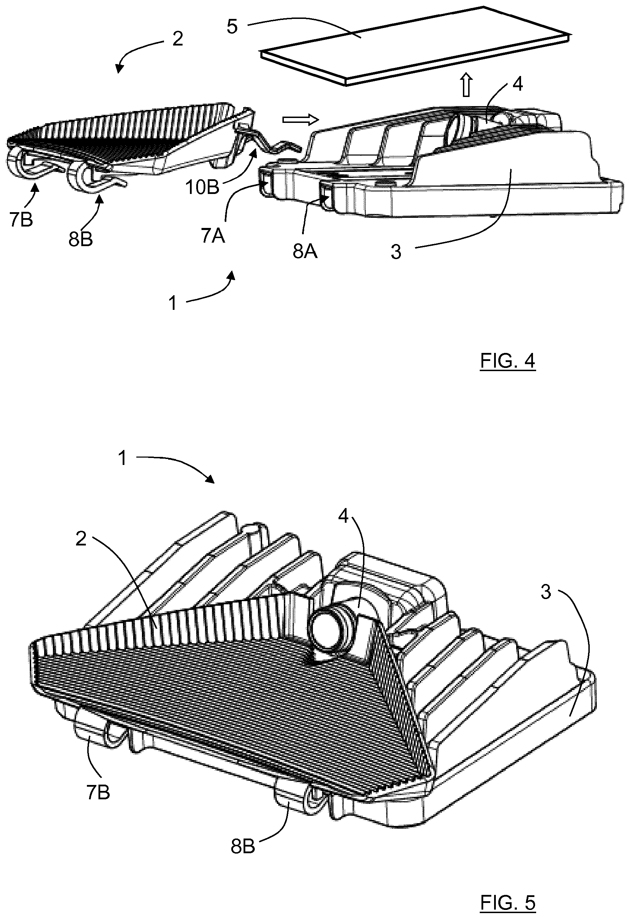

With reference also to Figure 4, a digital camera device is normally mounted to a mounting bracket 5 (only schematically indicated) positioned inside the vehicle 6, and comprises a light-trap arrangement 2 and a camera housing 3 with a lens assembly 4. When mounted to the camera housing 3, the light-trap arrangement 2 is intended to limit light incoming toward the lens assembly 4.

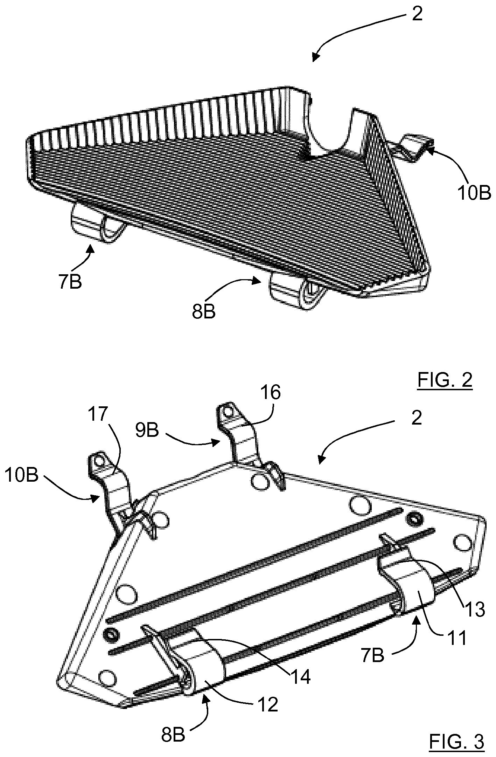

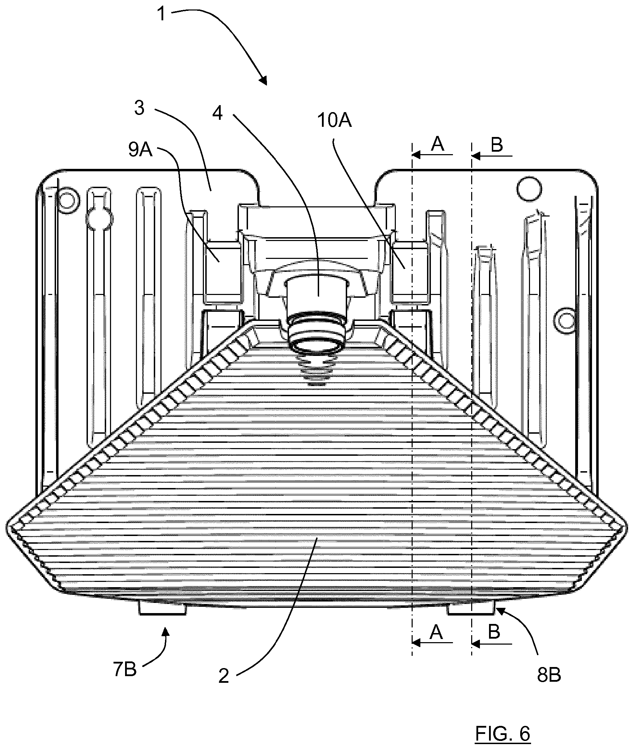

Throughout assembly of the camera device, it is desired that the mounting is efficient and uncomplicated. Therefore, according to the present disclosure and with reference also to Figure 2-3 and Figure 5-8, the camera housing 3 comprises four housing holding parts 7A, 8A, 9A, 10A and the light-trap arrangement 2 comprises four corresponding light-trap holding part 7B, 8B, 9B, 10B. Corresponding holding parts 7A, 7B; 8A, 8B; 9A, 9B; 10A, 10B are adapted to be brought into an engaging holding position when the light-trap arrangement 2 is attached to the camera housing 3.

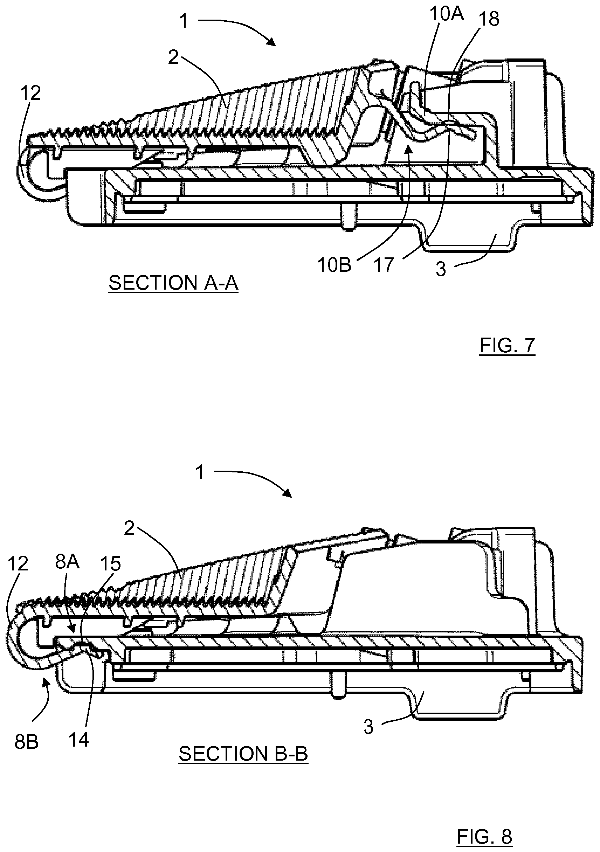

More in detail, according to the invention, the light-trap arrangement 2 comprises two light-trap rear holding parts 9B, 10B, each comprising a resilient angled tongue part 16, 17. The camera housing 3 comprises two housing rear holding parts 9A, 10A, each comprising a fixed indent part 18. Each tongue part 17 is adapted to engage a corresponding indent part 18 such that the corresponding tongue part 17 locks against the corresponding indent part 18 as in particular shown in Figure 7.

According to the invention, the light-trap arrangement 2 comprises two light-trap front holding parts 7B, 8B, each comprising a resilient hook 11, 12 with a protruding part 13, 14. The camera housing 3 comprises two housing front holding parts 7A, 8A, each comprising a fixed indent part 15. Each hook 12 is adapted to embrace a corresponding indent part 15 such that each protruding part 14 locks against a corresponding indent part 15 as in particular shown in Figure 8.

Many other types of holding parts are of course conceivable, where, in a pair of holding parts that are adapted for mutual engagement, according to some aspects, such a pair comprises a resilient holding part and a fixed holding part, or two resilient holding parts. One holding part, or both holding parts, can have a locking function relative the other holding part.

How these different types of holding parts are distributed and arranged at the camera housing 2 and the light-trap arrangement 2 can of course be varied in many ways. The camera housing 3 comprises at least one housing holding part 7A, 8A, 9A, 10A and the light-trap arrangement comprises at least one corresponding light-trap holding part 7B, 8B, 9B, 10B. Corresponding holding parts 7A, 7B; 8A, 8B; 9A, 9B; 10A, 10B are adapted to be brought into an engaging holding position when the light-trap arrangement 2 is attached to the camera housing 3.

According to the invention, corresponding holding parts 7A, 7B; 8A, 8B; 9A, 9B; 10A, 10B are adapted for releasable engagement.

According to the invention, for at least one pair of corresponding holding parts 7A, 7B; 8A, 8B; 9A, 9B; 10A, 10B, a first holding part 7B, 8B, 9B, 10B is resilient and a second holding part 7A, 8A, 9A, 10A is fixed, where the first holding part 7B, 8B, 9B, 10B is adapted to snap into a locking position in engagement with the second holding part 7A, 8A, 9A, 10A. Resilient holding parts can be positioned at the light-trap arrangement 2, the camera housing 3, or both. Fixed holding parts can also be positioned at the light-trap arrangement 2, the camera housing 3, or both.

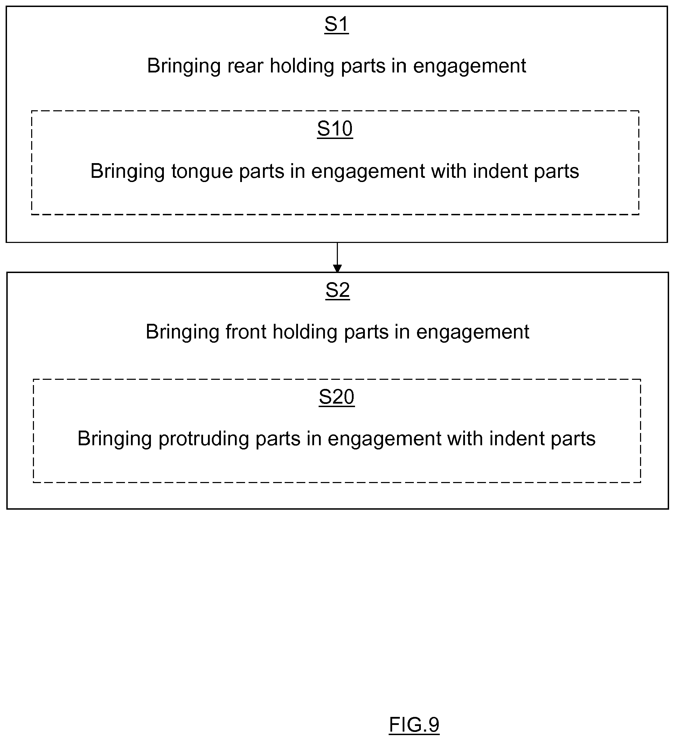

With reference to also to Figure 9, the present disclosure relates to a method for mounting a light-trap arrangement 2 to a camera housing 3 with a lens assembly 4, where, when mounted to the housing 3, the light-trap arrangement 2 is used for limiting light incoming toward the lens assembly 4. The housing 3 is intended to be mounted to a mounting bracket 5 positioned inside a vehicle 6. The method comprises bringing S1 at least one rear holding parts 9B, 10B included in the light trap arrangement 2 in engagement with at least one corresponding receiving rear holding part 9A, 10A included in the housing 3. The method also comprises bringing S2 at least one front holding part 7B, 8B included in the light trap arrangement 2 in engagement with at least one corresponding receiving front holding part 7A, 8A included in the housing 3.

According to the invention, the method further comprises bringing S10 resilient angled tongue parts 16, 17 included in the light trap arrangement 2 in engagement with corresponding receiving fixed indent parts 18 included in the housing 3. The method also comprises bringing S20 resilient hooks 11, 12 having protruding parts 13, 14 and being included in the light trap arrangement 2 in engagement with corresponding receiving fixed indent parts 14 included in the housing 3 such that each hook 12 is embracing the corresponding indent part 14, and such that the corresponding protruding part 14 is locking against the corresponding indent part 15.

By means of the present disclosure, the light trap arrangement 2 can be mounted to the camera housing 3 in a quick and reliable manner, and these assembled parts can later be mounted to the bracket 5 in a quick and reliable manner The present disclosure is not limited to the examples above, but may vary within the scope of the appended claims.

With reference to Figure 1, the digital camera device 1 may be of any suitable kind, and may be placed in any suitable position in the vehicle 6, for example at the ceiling 20, windshield 21 or the dashboard 22. Other examples are airbag covers.

According to some aspects, the digital camera device 1 comprises a power assembly, an interface assembly and a control unit, which all are positioned at and/or within the camera housing.

According to some aspects, the camera housing 3 comprises several sub-parts, for example an upper part and a lower part. According to some aspects, the light-trap arrangement 2 is made in a plastic material. According to some aspects, the camera housing 3 is made in a plastic material.

Generally, the present disclosure relates to a camera device 1 that comprises a light-trap arrangement 2 and a camera housing 3 with a lens assembly 4, where, when mounted to the camera housing 3, the light-trap arrangement 2 is intended to limit light incoming toward the lens assembly 4, where the camera device 1 is intended to be mounted to a mounting bracket 5 positioned inside a vehicle 6. The camera housing 3 comprises at least one housing holding part 7A, 8A, 9A, 10A and the light-trap arrangement comprises at least one corresponding light-trap holding part 7B, 8B, 9B, 10B, where corresponding holding parts 7A, 7B; 8A, 8B; 9A, 9B; 10A, 10B are adapted to be brought into an engaging holding position when the light-trap arrangement 2 is attached to the camera housing 3.

According to the invention, corresponding holding parts 7A, 7B; 8A, 8B; 9A, 9B; 10A, 10B are adapted for releasable engagement.

According to the invention, for at least one pair of corresponding holding parts 7A, 7B; 8A, 8B; 9A, 9B; 10A, 10B, a first holding part 7B, 8B, 9B, 10B is resilient and a second holding part 7A, 8A, 9A, 10A is fixed, where the first holding part 7B, 8B, 9B, 10B is adapted to snap into a locking position in engagement with the second holding part 7A, 8A, 9A, 10A.

According to the invention, the light-trap arrangement comprises two light-trap front holding parts 7B, 8B, each comprising a resilient hook 11, 12 with a protruding part 13, 14, and where the camera housing 3 comprises two housing front holding parts 7A, 8A, each comprising a fixed indent part 15, where each hook 12 is adapted to embrace a corresponding indent part 15 such that each protruding part 14 locks against a corresponding indent part 15.

According to the invention, the light-trap arrangement 2 comprises two light-trap rear holding parts 9B, 10B, each comprising a resilient angled tongue part 16, 17, and where the camera housing 3 comprises two housing rear holding parts 9A, 10A, each comprising a fixed indent part 18, where each tongue part 17 is adapted to engage a corresponding indent part 18 such that the corresponding tongue part 17 locks against the corresponding indent part 18.

## Claims

1. A camera device (1) that comprises a light-trap arrangement (2) and a camera housing (3) with a lens assembly (4), where, when mounted to the camera housing (3), the light-trap arrangement (2) is intended to limit light incoming toward the lens assembly (4), where the camera device (1) is adapted to be mounted to a mounting bracket (5) positioned inside a vehicle (6), where the camera housing (3) comprises at least one housing holding part (7A, 8A, 9A, 10A) and the light-trap arrangement comprises at least one corresponding light-trap holding part (7B, 8B, 9B, 10B), where corresponding holding parts (7A, 7B; 8A, 8B; 9A, 9B; 10A, 10B) are adapted to be brought into an engaging holding position when the light-trap arrangement (2) is attached to the camera housing (3), **characterized in that** the light-trap arrangement comprises two light-trap front holding parts (7B, 8B), each comprising a resilient hook (11, 12) with a protruding part (13, 14), and where the camera housing (3) comprises two housing front holding parts (7A, 8A), each comprising a fixed indent part (15), where each hook (12) is adapted to embrace a corresponding indent part (15) such that each protruding part (14) locks against a corresponding indent part (15), and where the light-trap arrangement (2) comprises two light-trap rear holding parts (9B, 10B), each comprising a resilient angled tongue part (16, 17), and where the camera housing (3) comprises two housing rear holding parts (9A, 10A), each comprising a fixed indent part (18), where each tongue part (17) is adapted to engage a corresponding indent part (18) such that the corresponding tongue part (17) locks against the corresponding indent part (18).

2. The camera device according to claim 1, wherein corresponding holding parts (7A, 7B; 8A, 8B; 9A, 9B; 10A, 10B) are adapted for releasable engagement.

3. The camera device according to any one of the claims 1 or 2, wherein, for at least one pair of corresponding holding parts (7A, 7B; 8A, 8B; 9A, 9B; 10A, 10B), a first holding part (7B, 8B, 9B, 10B) is resilient and a second holding part (7A, 8A, 9A, 10A) is fixed, where the first holding part (7B, 8B, 9B, 10B) is adapted to snap into a locking position in engagement with the second holding part (7A, 8A, 9A, 10A).

4. A method for mounting a light-trap arrangement (2) to a camera housing (3) with a lens assembly (4), where, when mounted to the housing (3), the light-trap arrangement (2) is used for limiting light incoming toward the lens assembly (4), where the housing (3) is intended to be mounted to a mounting bracket (5) positioned inside a vehicle (6), **characterized in that** the method comprises:
bringing (S1) at least one rear holding parts (9B, 10B) included in the light trap arrangement (2) in engagement with at least one corresponding receiving rear holding part (9A, 10A) included in the housing (3); and
bringing (S2) at least one front holding part (7B, 8B) included in the light trap arrangement (2) in engagement with at least one corresponding receiving front holding part (7A, 8A) included in the housing (3), wherein the method comprises:
bringing (S10) resilient angled tongue parts (16, 17) included in the light trap arrangement (2) in engagement with corresponding receiving fixed indent parts (18) included in the housing (3); and
bringing (S20) resilient hooks (11, 12) having protruding parts (13, 14) and being included in the light trap arrangement (2) in engagement with corresponding receiving fixed indent parts (14) included in the housing (3) such that each hook (12) is embracing the corresponding indent part (14), and such that the corresponding protruding part (14) is locking against the corresponding indent part (15).

## Patentansprüche

1. Kameravorrichtung (1), die eine Lichtfallenanordnung (2) und ein Kameragehäuse (3) mit einer Linsenbaugruppe (4) umfasst, wobei die Lichtfallenanordnung (2), wenn sie an dem Kameragehäuse (3) montiert ist, dazu bestimmt ist, zur Linsenbaugruppe (4) hin einfallendes Licht zu begrenzen, wobei die Kameravorrichtung (1) dazu ausgelegt ist, an einer im Inneren eines Fahrzeugs (6) positionierten Montageklammer (5) montiert zu werden, wobei das Kameragehäuse (3) mindestens ein Gehäusehalteteil (7A, 8A, 9A, 10A) umfasst und die Lichtfallenanordnung mindestens ein entsprechendes Lichtfallenhalteteil (7B, 8B, 9B, 10B) umfasst, wobei entsprechende Halteteile (7A, 7B; 8A, 8B; 9A, 9B; 10A, 10B) dazu ausgelegt sind, in eine eingreifende Halteposition gebracht zu werden, wenn die Lichtfallenanordnung (2) an dem Kameragehäuse (3) angebracht ist, **dadurch gekennzeichnet, dass** die Lichtfallenanordnung zwei vordere Lichtfallenhalteteile (7B, 8B) umfasst, die jeweils einen elastischen Haken (11, 12) mit einem hervorstehenden Teil (13, 14) umfassen, und wobei das Kameragehäuse (3) zwei vordere Gehäusehalteteile (7A, 8A) umfasst, die jeweils ein festes Einkerbungsteil (15) umfassen, wobei jeder Haken (12) dazu ausgelegt ist, ein entsprechendes Einkerbungsteil (15) so zu umgeben, dass jedes vorstehende Teil (14) in ein entsprechendes Einkerbungsteil (15) einrastet, und wobei die Lichtfallenanordnung (2) zwei hintere Lichtfallenhalteteile (9B, 10B) umfasst, die jeweils ein elastisches, abgewinkeltes Zungenteil (16, 17) umfassen, und wobei das Kameragehäuse (3) zwei hintere Gehäusehalteteile (9A, 10A) umfasst, die jeweils ein festes Einkerbungsteil (18) umfassen, wobei jedes Zungenteil (17) dazu ausgelegt ist, mit einem entsprechenden Einkerbungsteil (18) in Eingriff zu kommen, sodass das entsprechende Zungenteil (17) in das entsprechende Einkerbungsteil (18) einrastet.

2. Kameravorrichtung nach Anspruch 1, wobei entsprechende Halteteile (7A, 7B; 8A, 8B; 9A, 9B; 10A, 10B) zum lösbaren Eingriff ausgelegt sind.

3. Kameravorrichtung nach einem der Ansprüche 1 oder 2, wobei für mindestens ein Paar von entsprechenden Halteteilen (7A, 7B; 8A, 8B; 9A, 9B; 10A, 10B) ein erstes Halteteil (7B, 8B, 9B, 10B) elastisch und ein zweites Halteteil (7A, 8A, 9A, 10A) fest ist, wobei das erste Halteteil (7B, 8B, 9B, 10B) dazu ausgelegt ist, im Eingriff mit dem zweiten Halteteil (7A, 8A, 9A, 10A) in eine Einrastposition einzuschnappen.

4. Verfahren zum Montieren einer Lichtfallenanordnung (2) an einem Kameragehäuse (3) mit einer Linsenbaugruppe (4), wobei die Lichtfallenanordnung (2), wenn sie an dem Gehäuse (3) montiert ist, zum Begrenzen zur Linsenbaugruppe (4) hin einfallenden Lichts verwendet wird, wobei das Gehäuse (3) dazu bestimmt ist, an einer im Inneren eines Fahrzeugs (6) positionierten Montageklammer (5) montiert zu werden, **dadurch gekennzeichnet, dass** das Verfahren Folgendes umfasst:
Ineingriffbringen (S1) mindestens eines in der Lichtfallenanordnung (2) eingeschlossenen hinteren Halteteils (9B, 10B) mit mindestens einem entsprechenden im Gehäuse (3) eingeschlossenen aufnehmenden hinteren Halteteil (9A, 10A); und
Ineingriffbringen (S2) mindestens eines in der Lichtfallenanordnung (2) eingeschlossenen vorderen Halteteils (7B, 8B) mit mindestens einem entsprechenden im Gehäuse (3) eingeschlossenen aufnehmenden vorderen Halteteil (7A, 8A), wobei das Verfahren Folgendes umfasst:
Ineingriffbringen (S10) von in der Lichtfallenanordnung (2) eingeschlossenen elastischen, abgewinkelten Zungenteilen (16, 17) mit entsprechenden in dem Gehäuse (3) eingeschlossenen aufnehmenden, festen Einkerbungsteilen (18); und
Ineingriffbringen (S20) von elastischen Haken (11, 12), die vorstehende Teile (13, 14) aufweisen und in der Lichtfallenanordnung (2) eingeschlossen sind, mit entsprechenden in dem Gehäuse (3) eingeschlossenen, aufnehmenden, festen Einkerbungsteilen (14), sodass jeder Haken (12) das entsprechende Einkerbungsteil (14) umgibt, und sodass der entsprechende vorstehende Teil (14) in das entsprechende Einkerbungsteil (15) einrastet.

## Revendications

1. Dispositif de caméra (1) qui comprend un agencement de piège à lumière (2) et un boîtier de caméra (3) avec un ensemble lentille (4), où, lorsqu'il est monté sur le boîtier de caméra (3), l'agencement de piège à lumière (2) est prévu pour limiter la lumière entrant vers l'ensemble lentille (4), où le dispositif de caméra (1) est conçu pour être monté sur un support de montage (5) positionné à l'intérieur d'un véhicule (6), où le boîtier de caméra (3) comprend au moins une partie de maintien de boîtier (7A, 8A, 9A, 10A) et l'agencement de piège à lumière comprend au moins une partie de maintien de piège à lumière correspondante (7B, 8B, 9B, 10B), où les parties de maintien correspondantes (7A, 7B ; 8A, 8B ; 9A, 9B ; 10A, 10B) sont conçues pour être amenées dans une position de maintien en prise lorsque l'agencement de piège à lumière (2) est fixé au boîtier de caméra (3), **caractérisé en ce que** l'agencement de piège à lumière comprend deux parties de maintien avant de piège à lumière (7B, 8B), chacune comprenant un crochet élastique (11, 12) avec une partie en saillie (13, 14), et où le boîtier de caméra (3) comprend deux parties de maintien avant de boîtier (7A, 8A), chacune comprenant une partie en retrait fixe (15), où chaque crochet (12) est conçu pour entourer une partie en retrait correspondante (15) de telle sorte que chaque partie en saillie (14) se bloque contre une partie en retrait correspondante (15), et où l'agencement de piège à lumière (2) comprend deux parties de maintien arrière de piège à lumière (9B, 10B), chacune comprenant une partie languette angulaire élastique (16, 17), et où le boîtier de caméra (3) comprend deux parties de maintien arrière de boîtier (9A, 10A), chacune comprenant une partie en retrait fixe (18), où chaque partie languette (17) est conçue pour entrer en prise avec une partie en retrait correspondante (18) de telle sorte que la partie languette correspondante (17) se bloque contre la partie en retrait correspondante (18).

2. Dispositif de caméra selon la revendication 1, dans lequel des parties de maintien correspondantes (7A, 7B ; 8A, 8B ; 9A, 9B ; 10A, 10B) sont conçues pour une mise en prise libérable.

3. Dispositif de caméra selon l'une quelconque des revendications 1 ou 2, dans lequel, pour au moins une paire de parties de maintien correspondantes (7A, 7B ; 8A, 8B ; 9A, 9B ; 10A, 10B), une première partie de maintien (7B, 8B, 9B, 10B) est élastique et une seconde partie de maintien (7A, 8A, 9A, 10A) est fixe, dans lequel la première partie de maintien (7B, 8B, 9B, 10B) est conçue pour s'encliqueter dans une position de blocage en prise avec la seconde partie de maintien (7A, 8A, 9A, 10A).

4. Procédé de montage d'un agencement de piège à lumière (2) sur un boîtier de caméra (3) avec un ensemble lentille (4), où, lorsqu'il est monté sur le boîtier (3), l'agencement de piège à lumière (2) est utilisé pour limiter la lumière entrant vers l'ensemble lentille (4), où le boîtier (3) est prévu pour être monté sur un support de montage (5) positionné à l'intérieur d'un véhicule (6), **caractérisé en ce que** le procédé comprend :
la mise en prise (S1) d'au moins une parties de maintien arrière (9B, 10B) incluse dans l'agencement de piège à lumière (2) avec au moins une partie de maintien arrière de réception correspondante (9A, 10A) incluse dans le boîtier (3) ; et
la mise en prise (S2) d'au moins une partie de maintien avant (7B, 8B) incluse dans l'agencement de piège à lumière (2) avec au moins une partie de maintien avant de réception correspondante (7A, 8A) incluse dans le boîtier (3), dans lequel le procédé comprend :
la mise en prise (S10) de parties languette coudée élastique (16, 17) incluses dans l'agencement de piège à lumière (2) avec des parties en retrait fixes de réception correspondantes (18) incluses dans le boîtier (3) ; et
la mise en prise (S20) de crochets élastiques (11, 12) ayant des parties en saillie (13, 14) et étant inclus dans l'agencement de piège à lumière (2) avec des parties en retrait fixes de réception correspondantes (14) incluses dans le boîtier (3) de telle sorte que chaque crochet (12) entoure la partie en retrait correspondante (14), et de telle sorte que la partie en saillie correspondante (14) se bloque contre la partie en retrait correspondante (15).
